# EUROPÄISCHE PATENTSCHRIFT

(11) **EP 2 732 146 B1**
(45) Veröffentlichungstag und Bekanntmachung des Hinweises auf die Patenterteilung: **29.04.2015**
(21) Anmeldenummer: 12720899.9
(22) Anmeldetag: 16.05.2012
(51) Int. Cl.: F02D 41/14, F02D 41/22, F02D 41/00

(54) **VERFAHREN UND VORRICHTUNG ZUM BETREIBEN EINER BRENNKRAFTMASCHINE**
METHOD AND APPARATUS FOR CONTROLLING AN INTERNAL COMBUSTION ENGINE
PROCÉDÉ ET APPAREIL POUR CONTRÔLE D'UN MOTEUR À COMBUSTION INTERNE

(30) Priorität: 11.07.2011 DE 102011078930
(43) Veröffentlichungstag der Anmeldung: 21.05.2014
(73) Patentinhaber: Robert Bosch GmbH, 70442 Stuttgart (DE)
(72) Erfinder: BAUMANN, Thomas, 70806 Kornwestheim (DE); SCHULZ, Udo, 71665 Vaihingen/Enz (DE)
(86) Internationale Anmeldenummer: PCT/EP2012/059101
(87) Internationale Veröffentlichungsnummer: WO 2013/007428

(56) Entgegenhaltungen:
- EP-A1- 1 143 134
- WO-A2-2008/059337
- US-A1- 2007 101 965

## Beschreibung

Die Erfindung betrifft ein Verfahren zum Betreiben einer Antriebsvorrichtung, die zum Bereitstellen eines Antriebsdrehmoments einen mehrere, in einem Normalbetrieb jeweils einen Drehmomentbeitrag liefernde Zylinder aufweisenden Verbrennungsmotor sowie mindestens eine damit wirkverbundene Elektromaschine umfasst.

Ferner betrifft die Erfindung ein Computer-Programm-Produkt mit einem auf einem maschinenlesbaren Träger gespeicherten Programmcode zur Durchführung des oben genannten Verfahrens.

### Stand der Technik

Verfahren der eingangs genannten Art sind aus dem Stand der Technik bekannt. So zeigt beispielsweise die Offenlegungsschrift DE 101 16 749 A1 eine Antriebsvorrichtung, die einen Verbrennungsmotor und eine elektrische Maschine umfasst, die zum Bereitstellen eines Antriebsdrehmoments angesteuert werden, sodass in einem Normalbetrieb jeder der Zylinder des Verbrennungsmotors einen Drehmomentbeitrag liefert. Zum Bereitstellen eines gewünschten Drehmoments und zum Erhalten einer optimalen Leistungsfähigkeit und Kraftstoffausnutzung werden in einem gesonderten Betriebsmodus ausgewählte Zylinder des Verbrennungsmotors aktiviert oder deaktiviert.

Aus der Offenlegungsschrift WO 01/59282 A1 ist es darüber hinaus bekannt, in einem Diagnosemodus eine zylinderindividuelle Messung von zylinderindividuell abgegebenen Drehmomenten beziehungsweise Drehmomentbeiträgen und/oder von zylinderindividuellen Brennraumdrücken als charakteristische Betriebsgröße durchzuführen, wobei die Bestimmung der zylinderindividuellen Drehmomentunterschiede indirekt anhand einer Auswertung der Laufruhe der Brennkraftmaschine unter Zuhilfenahme eines Kurbelwellen-Drehzahlserisors durchgeführt wird.

Ein ähnliches Verfahren wird in der Patentanmeldung EP 1 849 979 A2 offenbart, bei welchem ein zylinderindividuelles Kraftstoff-Frischgas-Verhältnis im Abgas gemessen wird.

EP 114 3134 offenbart ein Verfahren, in dem das Drehmoment durch die Elektromaschine nachgebildet wird.

### Offenbarung der Erfindung

Das erfindungsgemäße Verfahren zeichnet sich dadurch aus, dass in einem Diagnosemodus eine zylinderselektive Messung mindestens einer charakteristischen Betriebsgröße erfolgt, wozu in dem Diagnosemodus nur der zu messende Zylinder betrieben und die Drehmomentbeiträge der übrigen Zylinder durch die Elektromaschine nachgebildet werden. Das erfindungsgemäße Verfahren hat den Vorteil, dass das Antriebsdrehmoment insgesamt erhalten bleibt, sodass ein Fahrer eines die Antriebsvorrichtung aufweisenden Fahrzeugs keinen Unterschied fühlt, während gleichzeitig nur der zu messende Zylinder betrieben und somit dessen charakteristische Betriebsgröße unabhängig von den übrigen Zylindern erfasst wird und keine Verfälschung des Messergebnisses durch andere Zylinder des Verbrennungsmotors erfolgt. Dadurch, dass die Drehmomentbeiträge der übrigen Zylinder durch die Elektromaschine nachgebildet werden, verhält sich die Antriebsvorrichtung im Diagnosemodus im Bezug auf das Antriebsdrehmoment genauso wie im normalen Betriebsmodus. So kann das Antriebsdrehmoment der Antriebsvorrichtung beispielsweise auch während des Diagnosemodus erhöht oder verringert werden. Hierdurch ist es insbesondere möglich, auch durch Vorsehen nur eines einzigen Sensors, der im gemeinsamen Abgastrakt der Zylinder vorgesehen ist, die zylinderindividuelle Messung der charakteristischen Betriebsgröße durchzuführen. Natürlich ist es auch denkbar, die Zylinder in zwei oder mehr Bänke aufzuteilen, denen jeweils ein Abgastrakt mit einem darin angeordneten entsprechenden Sensor zugeordnet ist.

Besonders bevorzugt wird der Diagnosemodus in Abhängigkeit eines aktuell durch die Elektromaschine erbringbaren Drehmoments eingestellt beziehungsweise durchgeführt. Dadurch wird gewährleistet, dass die Elektromaschine auch stets die Drehmomentbeiträge der übrigen Zylinder zumindest für einen Mindestzeitraum nachbilden kann. Ist die Elektromaschine nicht in der Lage, die Drehmomentbeiträge der übrigen Zylinder nachzubilden, so wird der Diagnosemodus gesperrt, da ansonsten ein plötzlicher Drehmomentabfall der Antriebsvorrichtung die Folge wäre. Vorzugsweise wird der Diagnosemodus in Abhängigkeit eines aktuellen Ladezustands eines der Elektromaschine zugeordneten Energiespeichers eingestellt beziehungsweise durchgeführt. Dabei ist insbesondere vorgesehen, dass, wenn der aktuelle Ladezustand des Energiespeichers einen vorgebbaren Schwellenwert unterschreitet, der Diagnosemodus gesperrt wird.

Gemäß einer vorteilhaften Weiterbildung der Erfindung ist vorgesehen, dass der Diagnosemodus so lange erfolgt, bis die charakteristische Betriebsgröße des zu messenden Zylinders erfasst wurde. Die Drehmomentbeiträge der übrigen Zylinder werden somit so lange durch die Elektromaschine nachgebildet, bis die charakteristische Betriebsgröße des zu messenden Zylinders sicher und eindeutig erfasst wurde. Zusätzlich ist insbesondere vorgesehen, dass diese Zeitdauer in Abhängigkeit des aktuellen Ladezustands der Elektromaschine, wie oben beschrieben, begrenzt wird, sodass eine Überanspruchung des Energiespeichers vermieden wird. Vorzugsweise erfolgt der Diagnosemodus so lange, bis das Abgasgemisch der übrigen Zylinder abgeführt wurde und somit nur noch das Abgas des zu messenden Zylinders zur Verfügung steht.

Gemäß einer bevorzugten Weiterbildung der Erfindung ist vorgesehen, dass in dem Diagnosemodus die charakteristische Betriebsgröße bei allen Zylindern nacheinander gemessen wird. Somit wird stets ein Zylinder betrieben, während die Drehmomentbeiträge der übrigen Zylinder durch die Elektromaschine nachgebildet werden. Anschließend erbringt ein anderer der Zylinder seinen Drehmomentbeitrag, während die übrigen, also auch der vorher ein Drehmoment liefernde Zylinder, deaktiviert sind und durch die Elektromaschine nachgebildet werden. Dadurch wird die charakteristische Betriebsgröße für jeden der Zylinder eindeutig gemessen beziehungsweise bestimmt.

Gemäß einer alternativen Ausführungsform ist vorgesehen, dass in dem Diagnosemodus nur ein verdächtiger Zylinder gemessen und insbesondere anschließend der Diagnosemodus wieder beendet wird. Unter einem verdächtigen Zylinder ist hierbei ein Zylinder des Verbrennungsmotors zu verstehen, der in Verdacht steht, nicht einen Sollwert bezüglich der Betriebsgröße zu erfüllen beziehungsweise nicht ausreichend genau zu erfüllen. Dabei kann der verdächtige Zylinder beispielsweise aufgrund einer zylinderselektiven Messung gemäß einem Verfahren aus dem Stand der Technik erfasst werden und anschließend durch das erfindungsgemäße Verfahren bestätigt beziehungsweise im Detail beziehungsweise mit einer höheren Genauigkeit gemessen werden.

Weiterhin ist bevorzugt vorgesehen, dass Ein- und/oder Auslassventile der übrigen Zylinder, also der deaktivierten Zylinder, im Diagnosemodus geschlossen werden, um den zylinderindividuellen Gaswechsel des betriebenen Zylinders zu messen. Dies ist natürlich nur dann möglich, wenn die Antriebsvorrichtung beziehungsweise der Verbrennungsmotor mit einem entsprechenden Ventiltrieb ausgestattet ist, der ein individuelles Betätigen seiner Ventile erlaubt. Werden die Ein- und Auslassventile der übrigen Zylinder geschlossen, so wird nur durch den zu messenden Zylinder Luft gefördert, sodass der zylinderindividuelle Einfluss der Luft gemessen wird.

Vorzugsweise ist vorgesehen, dass, während der zu messende Zylinder seinen Drehmomentbeitrag leistet, die Elektromaschine ein unterstützendes oder entgegenwirkendes Drehmoment erzeugt. Zum Messen bestimmter charakteristischer Betriebsgrößen kann eine höhere oder niedrigere Beanspruchung des zu messenden Zylinders vorteilhaft sein. Um das Gesamtantriebsmoment jedoch konstant zu halten, wirkt die Elektromaschine unterstützend oder entgegenwirkend, während der Zylinder einen niedrigeren oder höheren Drehmomentbeitrag im Bezug auf den eigentlichen Sollbeitrag leistet.

Besonders bevorzugt erbringt der zu messende Zylinder im Diagnosemodus ein erhöhtes Drehmoment oder wird mit einer erhöhten Kraftstoffmenge befüllt beziehungsweise versorgt, wodurch sich die charakteristische Betriebsgröße leichter beziehungsweise deutlicher erfassen lässt. Dem wirkt die Elektromaschine - wie bereits erwähnt - bevorzugt entgegen, um das zusätzliche Drehmoment zu kompensieren.

Die erfindungsgemäße Vorrichtung zeichnet sich durch ein speziell hergerichtetes Steuergerät aus, das Mittel zur Durchführung des Verfahrens, wie es oben beschrieben wurde, enthält. Dem Steuergerät ist bevorzugt wenigstens ein Sensor zur Erfassung der charakteristischen Betriebsgröße zugeordnet sowie Schnittstellen, die es dem Steuergerät erlauben, den Verbrennungsmotor sowie die Elektromaschine wie oben beschrieben anzusteuern, um die zylinderindividuelle Messung der Betriebsgröße zu ermöglichen.

Das erfindungsgemäße Computer-Programm-Produkt zeichnet sich durch einen Programm-Code zur Durchführung des oben beschriebenen Verfahrens aus, wenn das Programm auf einem Computer ausgeführt wird.

Im Folgenden soll die Erfindung anhand der Zeichnung näher erläutert werden. Dazu zeigen
- Figur 1: eine Antriebsvorrichtung in einer vereinfachten Darstellung und
- Figur 2: ein vorteilhaftes Verfahren zum Betreiben der Antriebsvorrichtung in einem Blockschaltbild.

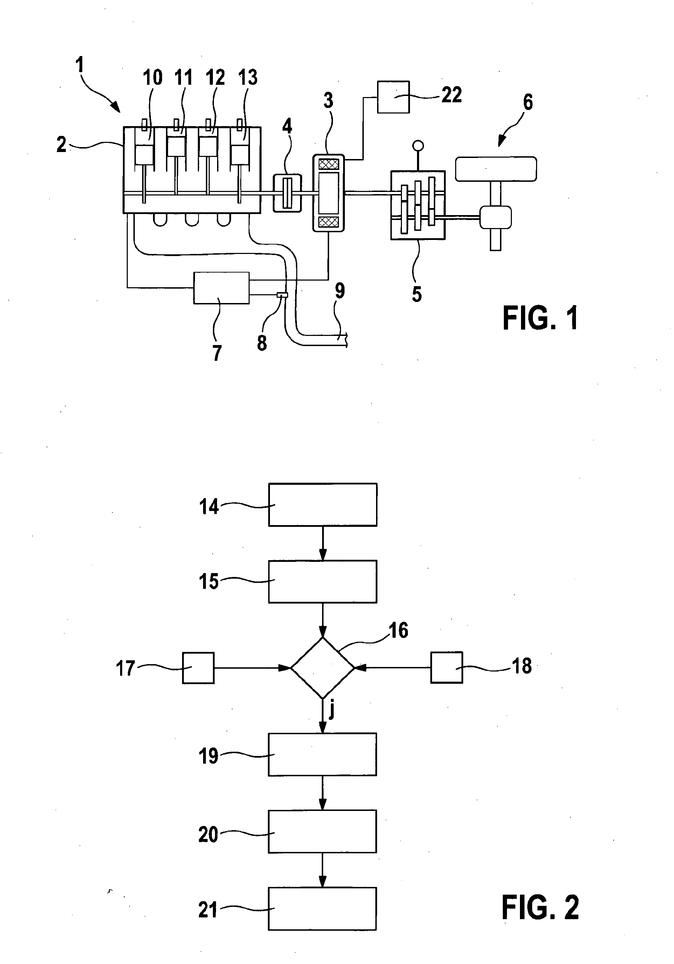

Figur 1 zeigt eine Antriebsvorrichtung 1 für ein Kraftfahrzeug, die einen Verbrennungsmotor 2 sowie eine Elektromaschine 3 umfasst. Der Verbrennungsmotor 2 ist dabei über eine betätigbare Kupplung 4 mit der Elektromaschine 3 wirkverbindbar. Die Elektromaschine 3 ist ausgangsseitig weiterhin mit einem Getriebe 5 verbunden, das als Automatikgetriebe oder Handschaltgetriebe ausgebildet sein kann. Das Getriebe 5 ist ausgangsseitig mit einer hier nur angedeuteten Antriebsachse 6 des nicht näher dargestellten Kraftfahrzeugs verbunden. Die Antriebsvorrichtung 1 weist weiterhin eine Vorrichtung 7 auf, die zumindest mit dem Verbrennungsmotor 2 und der Elektromaschine 3 verbunden ist, um diese anzusteuern. Ferner ist die Vorrichtung 7 mit einem Sensor 8 verbunden, der in einem Abgastrakt 9 des Verbrennungsmotors 2 angeordnet ist, um wenigstens eine bestimmte Größe des Abgases, wie beispielsweise den Sauerstoffgehalt des Abgases, erfasst.

Der Verbrennungsmotor 2 weist mehrere Zylinder 10, 11, 12 und 13 auf, deren Auslasskanäle in den gemeinsamen Abgastrakt 9 münden, sodass alle Abgase der Zylinder 10-13 an dem Sensor 8 vorbeigeführt werden.

Mit Bezug auf Figur 2 wird im Folgenden ein Verfahren zum Betreiben der Antriebsvorrichtung 1 beschrieben, das insbesondere von der Vorrichtung 7 durchgeführt wird, die hierzu ein speziell hergerichtetes Steuergerät aufweist, das entsprechende Mittel zur Durchführung des Verfahrens enthält.

In einem ersten Schritt 14 wird die Antriebsvorrichtung 1 in Betrieb genommen und bevorzugt ein Normalbetrieb eingestellt. Unter Normalbetrieb ist hierbei ein Betrieb zu verstehen, in welchem alle Zylinder 10-13 des Verbrennungsmotors 2 einen Drehmomentbeitrag leisten, der bei geschlossener Kupplung 4 auf die Antriebsachse 6 wirkt.

Im darauffolgenden Schritt 15 wird ein Diagnosemodus aktiviert, in welchem eine zylinderselektive Messung mindestens einer charakteristischen Betriebsgröße mittels des Sensors 8 erfolgt. Insbesondere ist vorgesehen, dass ein Kraftstoff-Luft-Verhältnis mittels des als Lambdasonde ausgebildeten Sensors 8 zylinderselektiv gemessen wird. Hierzu wird vorzugsweise ein aus dem Stand der Technik bekanntes Verfahren angewandt, bei welchem in Abhängigkeit von dem Drehwinkel der Kurbelwelle des Verbrennungsmotors 1, der mittels eines Kurbelwellensensors erfasst wird, der Zeitpunkt bestimmt, zu welchem das Abgas eines bestimmten Zylinders der Zylinder 10 bis 12 den Sensor 8 passiert. Wird dabei festgestellt, dass einer der Zylinder einen unplausiblen oder nicht erwarteten Wert der erfassten Betriebsgröße liefert, so wird das Diagnoseverfahren in vorteilhafter Weise wie folgt weitergeführt:

Zunächst wird in einem Abfrageschritt 16 der aktuelle Ladezustand eines der Elektromaschine 3 zugeordneten elektrischen Energiespeichers 22, der zuvor in einem Schritt 17 erfasst wurde, mit einem Schwellenwert verglichen, der zuvor, beispielsweise bei der Applizierung der Antriebsvorrichtung, vorgegeben wurde. Liegt der aktuelle Ladezustand unterhalb des Schwellenwerts, so wird das Diagnoseprogramm entweder abgebrochen oder so lange ausgesetzt, bis der Ladezustand einen Wert erreicht, der oberhalb des Schwellenwerts liegt. Dies kann beispielsweise durch einen Betrieb der Antriebsvorrichtung in einem generatorischen Modus erreicht werden, wenn die Elektromaschine 3 durch den Verbrennungsmotor 2 angetrieben wird. Zusätzlich oder alternativ wird der Betriebsbereich des Verbrennungsmotors 2 in einem Schritt 18 geprüft und entschieden, ob die Elektromaschine 3 die fehlenden Drehmomentbeiträge der übrigen Zylinder 11-13 nachbilden kann, ob also die Leistung des Elektromotors 3 in dem aktuell vorliegenden Betriebsbereich der Antriebsvorrichtung 1 ausreicht, um ein entsprechend hohes Drehmoment bereitzustellen.

Liegt der Wert des aktuellen Ladezustands oberhalb des vorgegebenen Schwellenwerts, wird weiter verfahren (j) zu einem weiteren Schritt 19, in dem der Verbrennungsmotor 2 derart angesteuert wird, dass der zuvor im Schritt 15 in Verdacht geratene Zylinder, beispielsweise 10, zum Liefern seines Drehmomentbeitrags angesteuert wird, während die übrigen Zylinder 11 bis 13 deaktiviert, also nicht mehr genutzt beziehungsweise befeuert werden. Gleichzeitig wird die Elektromaschine 3 derart angesteuert, dass sie die Drehmomentbeiträge der übrigen Zylinder 11-13 nachbildet. Mit anderen Worten simuliert die Elektromaschine 3 die ausbleibenden Drehmomentbeiträge der Zylinder 11, 12 und 13, sodass an der Antriebsachse 6 weiterhin das gleiche Antriebsdrehmoment anliegt und insbesondere der Fahrer keinen Unterschied im Fahrverhalten bemerkt, abgesehen vielleicht von einem akustischen Unterschied. Es wird erreicht, dass nur Abgas des zu messenden Zylinders 10 durch den Abgastrakt 9 geführt wird. Vorzugsweise wird den übrigen Zylindern 11 bis 13 kein Kraftstoff zugeführt und besonders bevorzugt werden die Ein- und Auslassventile der übrigen Zylinder 11-13 geschlossen, sodass keine Luft durch die Zylinder 11-13 gepumpt und mit dem Abgas des Zylinders 10 vermischt wird. Anschließend erfasst der Sensor 8 in einem Schritt 20 lediglich das den Zylinder 10 verlassende Abgas, wodurch sehr genau der Einfluss des Zylinders 10 auf die zu messende charakteristische Betriebsgröße erfasst wird.

Der Diagnosemodus wird so lange aufrechterhalten, bis die charakteristische Betriebsgröße des Zylinders 10 eindeutig erfasst wurde, zumindest aber so lange, bis das Abgasgemisch der übrigen Zylinder 11 bis 13 den Abgastrakt 9 verlassen hat beziehungsweise abgeführt wurde.

Alternativ zu dem Lambdawert, kann auch die Abgastemperatur, der Abgasdruck oder auch der Drehmomentbeitrag des zu messenden Zylinders 10 gemessen beziehungsweise erfasst werden. Hierdurch lassen sich zylinderindividuelle Korrekturen insbesondere bezüglich der Einspritzmenge und/oder des Einspritzzeitpunkts von Kraftstoff, des Zündzeitpunkts oder der Öffnungszeiten und/oder Hübe der Ein- und/oder Auslassventile des jeweiligen Zylinders durchführen. Hierzu müssen lediglich entsprechende Sensoren beziehungsweise Mittel bereitgestellt werden, die das Erfassen des jeweiligen Werts ermöglichen. Durch das oben beschriebene und durch die Vorrichtung 7 durchgeführte Verfahren lässt sich jeder der Werte zylinderindividuell sicher erfassen.

Zweckmäßigerweise wird die Drehzahl des Verbrennungsmotors und vorzugsweise der Kurbelwellenwinkel erfasst, und bei der Ansteuerung der Elektromaschine 3 berücksichtigt, um die fehlenden Drehmomentbeiträge genau nachbilden zu können. Hierzu wird beispielsweise das Verbrennungsmotor-Drehzahlsignal direkt einem Steuergerät der Elektromaschine 3 zugeführt.

Wurden die eine oder die mehreren charakteristischen Betriebsgrößen sicher erfasst und gegebenenfalls entsprechende Korrekturen durchgeführt, wird in einem abschließenden Schritt 21 das Diagnoseprogramm beziehungsweise der Diagnosemodus beendet.

Vorzugsweise wird in dem Diagnosemodus die zylinderselektive Messung für einen Zylinder nach dem anderen durchgeführt, sodass stets ein Zylinder betrieben und die Drehmomentbeiträge der übrigen Zylinder durch die Elektromaschine 3 nachgestellt werden, wobei nur der zu messende Zylinder mit Kraftstoff versorgt und gegebenenfalls gezündet wird. Gemäß eines hier nicht dargestellten Ausführungsbeispiels entfällt Schritt 15, wobei alle Zylinder des Verbrennungsmotors 2 beziehungsweise die Werte aller Zylinder 10-13 nacheinander entsprechend der Schritte 19 und 20 gemessen werden.

Durch das vorteilhafte Verfahren lässt sich beispielsweise feststellen, ob die Ein- und/oder Auslassventile bestimmungsgemäß öffnen oder schließen, ob die Heizleistung von Glühstiftkerzen ausreichend ist, insbesondere im Warmlauf, und/oder ob die Einspritzmenge des Injektors innerhalb vorgegebener Toleranzgrenzen liegt.

Vorzugsweise ist der mindestens eine Sensor 8, insbesondere in der beschriebenen Ausbildung als Lambda-Sensor, im Abgastrakt 9 in unmittelbarer Nähe der Zusammenführung beziehungsweise Mischstelle der zylinderindividuellen Abgase angeordnet, um Laufzeit- und Mischeffekte zu minimieren. Wie bereits erwähnt, ist der Zeitpunkt der Messung wichtig und wird bevorzugt durch Kurbelwellenwinkel beziehungsweise Ein- und Auslassventilstellungen synchron oder zeitsynchron, beispielsweise jede Millisekunde, erfolgen. Werden die Messwerte unterschiedlicher Sensoren bei unterschiedlichem Einbauort im Abgastrakt 9 in Relation gebracht oder verrechnet, so können die Laufzeiten im Abgastrakt mittels Modellbildung berücksichtigt beziehungsweise ebenfalls bestimmt werden.

Für eine genauere zylinderindividuelle Diagnose beziehungsweise Messung ist es auch denkbar, Muster aus Motor-Ein- und/oder Ausgangssignalen zu bestimmen und mit Soll-Mustern zu vergleichen. Auch ist es möglich, mit der Elektromaschine 3 ein entgegengesetztes oder mitläufiges beziehungsweise unterstützendes Drehmoment zu erzeugen, während der zu messende Zylinder seinen Drehmomentbeitrag liefert. So kann beispielsweise, um ein messbares Signal zu erhalten, der zu messende Zylinder mit einem Mehrbetrag einer Einspritzmenge versorgt werden und der für die Gesamtantriebsleistung ungewollte Mehrbetrag des Drehmoments durch die Elektromaschine 3 kompensiert werden.

Um im Mischbetrieb, also wenn der Verbrennungsmotor 2 und die Elektromaschine 3 und insbesondere wenn eine Teillastanforderung vorliegt, den Verbrennungsmotor 2 im verbrennungsoptimalen und verbrauchsoptimalen Zustand zu betreiben und die elektromotorische Reichweite zu optimieren, werden bevorzugt nicht alle Zylinder verbrennungsmotorisch betrieben, sodass nur ausgewählte Zylinder einen Drehmomentbeitrag leisten, und die übrigen Zylinder (mindestens einer) durch die Elektromaschine 3 nachgebildet beziehungsweise ersetzt werden.

Das vorteilhafte Verfahren wird bevorzugt in der Werkstattdiagnose eingesetzt, wo beispielsweise durch Einbindung von externen Abgasanalysegeräten und weiteren Messgeräten, die beispielsweise auch akustische Sensoren umfassen, die zylinderindividuellen Diagnosemöglichkeiten weiter verbessert werden. Vorzugsweise schleppt die Elektromaschine 3 den Verbrennungsmotor 2 auf einen Diagnosebetriebspunkt, sodass vorteilhafterweise auch während der Start- und/oder Warmlaufphase eine zylinderindividuelle Diagnose ermöglicht wird. Der Einfluss des Fahrers und des Fahrzyklusses des realen Fahrbetriebs wird hier vorzugsweise ausgeblendet. Gewünschte Betriebszustände zur zylinderindividuellen Diagnose des Verbrennungsmotors 2, die im normalen Fahrbetrieb umständlich zu erreichen sind, können hier einfacher dargestellt werden.

Durch das oben beschriebene Verfahren sind insbesondere die folgenden Diagnosemodi möglich:
- Nullmengenkalibrierung (im Verbrennungsmotorschub) der Injektoren, wobei die Elektromaschine 3 den Verbrennungsmotor 2 in einen beliebigen Drehzahlbereich schleppt
- Zylinderkompressionstest
- zylinderindividuelle Leckageprüfung
- zylinderindividueller Abgastest
- zylinderindividueller Drehmomentbeitrag
- Injektormengenabgleich
- zylinderindividuelle Zündungsdiagnose
- Aktualisierung von Abgleichwerten, wie beispielsweise eines Reibverlust-Kennfelds des Verbrennungsmotors 2.

Natürlich ist die Erfindung nicht auf eine Antriebsvorrichtung beschränkt, deren Verbrennungsmotor und Elektromaschine wie in Figur 1 dargestellt miteinander verbunden sind. Natürlich können Verbrennungsmotor 2 und Elektromaschine 3 beispielsweise auch parallel zueinander geschaltet werden. Auch ist es denkbar, den Verbrennungsmotor 2 mit einer Antriebsachse wirkzuverbinden, und die Elektromaschine 3 mit einer anderen Antriebsachse des gleichen Kraftfahrzeugs.

## Patentansprüche

1. Verfahren zum Betreiben einer Antriebsvorrichtung (1), die zum Bereitstellen eines Antriebsmoments einen mehrere, in einem Normalbetrieb jeweils einen Drehmomentbeitrag liefernde Zylinder (10,11,12,13) aufweisenden Verbrennungsmotor (2) sowie mindestens eine damit wirkverbundene Elektromaschine (3) umfasst, **dadurch gekennzeichnet, dass** in einem Diagnosemodus eine zylinderselektive Messung mindestens einer charakteristischen Betriebsgröße erfolgt, wozu in dem Diagnosemodus nur der zu messende Zylinder (10,11,12,13) betrieben und die Drehmomentbeiträge der übrigen Zylinder (10,11,12,13) durch die Elektromaschine (3) nachgebildet werden.

2. Verfahren nach Anspruch 1, **dadurch gekennzeichnet, dass** der Diagnosemodus in Abhängigkeit eines aktuell durch die Elektromaschine (3) erbringbaren Drehmoments, und insbesondere in Abhängigkeit eines aktuellen Ladezustands eines der Elektromaschine (3) zugeordneten Energiespeichers (22), eingestellt wird.

3. Verfahren nach einem der vorhergehenden Ansprüche, **dadurch gekennzeichnet, dass** der Diagnosemodus so lange erfolgt, bis die charakteristische Betriebsgröße des zu messenden Zylinders (10,11,12,13) erfasst wurde, insbesondere bis das Abgasgemisch zumindest der übrigen Zylinder (10,11,12,13) abgeführt wurde.

4. Verfahren nach einem der vorhergehenden Ansprüche, **dadurch gekennzeichnet, dass** in dem Diagnosemodus die charakteristische Betriebsgröße aller Zylinder (10,11,12,13) nacheinander gemessen wird.

5. Verfahren nach einem der vorhergehenden Ansprüche, **dadurch gekennzeichnet, dass** in dem Diagnosemodus nur ein verdächtiger Zylinder (10,11,12,13) gemessen wird.

6. Verfahren nach einem der vorhergehenden Ansprüche, **dadurch gekennzeichnet, dass** Ein- und/oder Auslassventile der übrigen Zylinder (10,11,12,13) im Diagnosemodus geschlossen werden, um den zylinderindividuellen Gaswechsel zu messen.

7. Verfahren nach einem der vorhergehenden Ansprüche, **dadurch gekennzeichnet, dass**, während der zu messende Zylinder (10,11,12,13) seinen Drehmomentbeitrag leistet, der Elektromotor (3) ein unterstützendes oder entgegenwirkendes Drehmoment erzeugt.

8. Verfahren nach einem der vorhergehenden Ansprüche, **dadurch gekennzeichnet, dass** im Diagnosemodus der zu messende Zylinder (10,11,12,13) ein erhöhtes Drehmoment erbringt oder mit einer erhöhten Kraftstoffmenge befüllt/versorgt wird.

9. Vorrichtung (7) zum Betreiben einer Antriebsvorrichtung (1), **gekennzeichnet durch** ein speziell hergerichtetes Steuergerät, das Mittel zur Durchführung des Verfahrens nach einem der Ansprüche 1 bis 8 enthält.

10. Computer-Programm-Produkt mit einem auf einem maschinenlesbaren Träger gespeicherten Programm-Code zur Durchführung des Verfahrens nach einem der Ansprüche 1 bis 8, wenn das Programm auf einem Computer ausgeführt wird.

## Claims

1. Method for operating a drive device (1) that for the purpose of providing a driving torque comprises an internal combustion engine (2), which comprises a plurality of cylinders (10, 11, 12, 13) that during normal operation in each case supply a torque contribution, and at least one electric motor (3) that is operatively connected to said engine, **characterized in that**, in a diagnostic mode a cylinder-selective measurement at least of one characteristic operating variable is performed, for which purpose in the diagnostic mode only the cylinder (10, 11, 12, 13) to be measured is in operation and the torque contributions of the remaining cylinders (10, 11, 12, 13) are simulated by way of the electric motor (3).

2. Method according to Claim 1, **characterized in that** the diagnostic mode is adjusted in dependence upon a torque that can currently be generated by way of the electric motor (3), and in particular in dependence upon a prevailing charge state of an energy storage device (22) that is allocated to the electric motor (3).

3. Method according to any one of the preceding claims, **characterized in that** the diagnostic mode occurs until the characteristic operating variable of the cylinder to be measured (10, 11, 12, 13) has been detected, in particular until the exhaust gas mixture at least of the remaining cylinders (10, 11, 12, 13) is discharged.

4. Method according to any one of the preceding claims, **characterized in that** in the diagnostic mode the characteristic operating variable of all the cylinders (10, 11, 12, 13) is measured one after the other.

5. Method according to any one of the preceding claims, **characterized in that** in the diagnostic mode only a suspect cylinder (10, 11, 12, 13) is measured.

6. Method according to any one of the preceding claims, **characterized in that** intake and/or exhaust valves of the remaining cylinders (10, 11, 12, 13) are closed in the diagnostic mode in order to measure the cylinder-individual gas exchange.

7. Method according to any one of the preceding claims, **characterized in that**, while the cylinder (10, 11, 12, 13) to be measured supplies its torque contribution, the electric motor (3) generates a supporting or counteracting torque.

8. Method according to any one of the preceding claims, **characterized in that** in the diagnostic mode the cylinder (10, 11, 12, 13) to be measured generates an increased amount of torque or is filled/supplied with an increased amount of fuel.

9. Device (7) for operating a drive device (1), **characterized by** a specially arranged control device which comprises means for implementing the method according to any one of Claims 1 to 8.

10. Computer program product having a program code that is stored on a machine-readable storage medium for implementing the method according to any one of Claims 1 to 8, if the program is performed on a computer.

## Revendications

1. Procédé pour faire fonctionner un dispositif d'entraînement (1) qui comprend, pour fournir un couple d'entraînement, un moteur à combustion interne (2) présentant plusieurs cylindres (10, 11, 12, 13) fournissant chacun une contribution au couple dans un mode de fonctionnement normal ainsi qu'au moins une machine électrique (3) connectée fonctionnellement à celui-ci, **caractérisé en ce que** dans un mode de diagnostic, une mesure spécifique au cylindre d'au moins une grandeur de fonctionnement caractéristique est effectuée, pour laquelle, dans le mode de diagnostic, seulement le cylindre à mesurer (10, 11, 12, 13) fonctionne et les contributions au couple des autres cylindres (10, 11, 12, 13) sont reproduites par la machine électrique (3).

2. Procédé selon la revendication 1, **caractérisé en ce que** le mode de diagnostic est ajusté en fonction d'un couple pouvant être généré actuellement par la machine électrique (3), et en particulier en fonction d'un état de charge actuel d'un accumulateur d'énergie (22) associé à la machine électrique (3).

3. Procédé selon l'une quelconque des revendications précédentes, **caractérisé en ce que** le mode de diagnostic a lieu jusqu'à ce que la grandeur de fonctionnement caractéristique du cylindre à mesurer (10, 11, 12, 13) ait été détectée, notamment jusqu'à ce que le mélange de gaz d'échappement d'au moins les autres cylindres (10, 11, 12, 13) ait été évacué.

4. Procédé selon l'une quelconque des revendications précédentes, **caractérisé en ce que** dans le mode de diagnostic, la grandeur de fonctionnement caractéristique de tous les cylindres (10, 11, 12, 13) est mesurée successivement.

5. Procédé selon l'une quelconque des revendications précédentes, **caractérisé en ce que** dans le mode de diagnostic, seulement un cylindre suspect (10, 11, 12, 13) est mesuré.

6. Procédé selon l'une quelconque des revendications précédentes, **caractérisé en ce que** des soupapes d'entrée et/ou de sortie des autres cylindres (10, 11, 12, 13) sont fermées dans le mode de diagnostic, afin de mesurer l'échange de gaz individuel par cylindre.

7. Procédé selon l'une quelconque des revendications précédentes, **caractérisé en ce que** pendant que le cylindre à mesurer (10, 11, 12, 13) fournit sa contribution au couple, le moteur électrique (3) produit un couple à effet favorisant ou opposé.

8. Procédé selon l'une quelconque des revendications précédentes, **caractérisé en ce que** dans le mode de diagnostic, le cylindre à mesurer (10, 11, 12, 13) génère un couple accru ou est rempli/alimenté avec une quantité de carburant accrue.

9. Dispositif (7) pour faire fonctionner un dispositif d'entraînement (1), **caractérisé par** un appareil de commande fabriqué spécialement, lequel contient des moyens pour mettre en oeuvre le procédé selon l'une quelconque des revendications 1 à 8.

10. Produit de programme informatique comprenant un code de programme mémorisé sur un support lisible par machine pour mettre en oeuvre le procédé selon l'une quelconque des revendications 1 à 8, lorsque le programme est exécuté sur un ordinateur.
